# EUROPEAN PATENT SPECIFICATION

(11) **EP 3 068 617 B1**
(45) Date of publication and mention of the grant of the patent: **01.08.2018**
(21) Application number: 13897618.8
(22) Date of filing: 15.11.2013
(51) Int. Cl.: B29D 30/54

(54) **METHODS OF FORMING A RETREADED TIRE USING A DEGASSING OPERATION**
VERFAHREN ZUR HERSTELLUNG EINES RUNDERNEUERTEN REIFENS UNTER VERWENDUNG EINES ENTGASUNGSVORGANGS
PROCÉDÉ DE FORMATION D'UN PNEU RECHAPÉ UTILISANT UNE OPÉRATION DE DÉGAZAGE

(43) Date of publication of application: 21.09.2016
(73) Proprietor: Compagnie Générale des Etablissements Michelin, 63000 Clermont-Ferrand (FR)
(72) Inventor: IKONOMOV, Metodi L, Greenville, South Carolina 29605 (US); LUNG, David Chan Wah, Greenville, South Carolina 29605 (US); CHEBLI, Adib T., Greenville, South Carolina 29605 (US); WIDMYER, Michael, Greenville, South Carolina 29605 (US)
(74) Representative: Casalonga
(86) International application number: PCT/US2013/070295
(87) International publication number: WO 2015/073022

(56) References cited:
- GB-A- 2 091 173
- US-A- 3 837 385
- US-A- 3 847 695
- US-A- 3 904 459
- US-A- 4 309 234
- US-A1- 2010 051 175

## Description

### BACKGROUND OF THE INVENTION

### Field of the Invention

This invention relates generally to methods and apparatuses for manufacturing retreaded tires, and treads for retreading tires. More specifically, this invention relates to methods and apparatuses for curing a retreaded tire without a curing membrane.

### Description of the Related Art

A retreaded tire consists of a new pre-cured tread attached to a pre-existing tire carcass. The tire carcass is prepared to receive the new pre-cured tread by removing the prior tread, such as through buffing or abrading operations. The new pre-cured tread is then applied to the tire carcass with a bonding layer comprising bonding material to secure the new tread to the carcass. Subsequently, a flexible curing membrane (or envelope) is arranged at least partially around the tire to create a sealed fluid chamber between the curing membrane and the tire. The combination of a retreaded tire with an installed curing membrane is referred to herein as a tire-membrane assembly.

In operation, multiple tire-membrane assemblies are placed within a tire curing chamber, such as an autoclave. Each tire-membrane assembly is then placed in fluid communication with a vacuum source. The vacuum source substantially removes gas between the tire and the curing membrane. Subsequently, while under vacuum pressure, the curing chamber is also heated and positively pressurized, such that a pressure force is applied to the flexible curing membrane. Accordingly, the flexible curing membrane is forced into grooves and other sufficiently sized voids arranged along the top side (*i.e.,* outer or exposed side) of the tread during curing operations.

Documents US 2010/0051175 - A, US 3847695 - A, US 3837385 - A, US 3904459 - A and GB 2091173 -A all disclose tire retreading methods comprising the use of flexible curing membranes put around the tire to be retreaded, in order to remove air/gases trapped between carcass, bonding layer and pre-cured tread before and during cure in autoclave.

Because these flexible curing membranes are used to separately cure numerous retreaded tires, the membranes undergo numerous flexing cycles due to the repeated penetration of grooves and sufficiently sized voids arranged along the top side of the tread, which can notably reduce the useful life of the flexible curing membrane. Additionally, the membranes frequently wear out from normal use, due at least in part to repeated motion, exposure to elevated temperature, and pressure changes. Thus, it is desirable to develop more efficient curing processes that do not require consumable curing membranes.

Furthermore, the curing membrane may tend to compress the tread, which may alter the cured dimensions of the tread. Therefore, there is also a need to improve the retreading process by reducing any instabilities or deforming forces acting on or impacting the tread.

### SUMMARY OF THE INVENTION

The present invention includes a method of forming a retreaded tire according to claim 1.

Preferred embodiments of the invention are defined in the dependent claims 2 to 15.

The method can include providing an unbonded retreaded tire, which comprises a pre-cured tread arranged annularly around an outer circumference of an annular tire carcass with a bonding layer comprising uncured bonding material arranged between the pre-cured tread and the annular tire carcass, the unbonded retreaded tire having a thickness extending between inner and outer sides of the unbonded retreaded tire, where the annular tire carcass comprises a pair of sidewalls spaced apart in an axial direction of the unbonded retreaded tire, each of the pair of sidewalls extending radially inward from an undertread portion to a bead portion. Particular embodiments of the method may also include forming a degassing assembly by arranging a flexible degassing membrane around an outer circumference of the unbonded retreaded tire, the degassing assembly having one or more vacuum chambers that as a collective substantially surround at least and outer side of the unbonded retreaded tire. The method may also include placing the each of the one or more vacuum chambers under at least partial vacuum pressure and performing a degassing operation by pressurizing a degassing chamber while each of the one or more vacuum chambers in the degassing assembly are at least under partial vacuum pressure, the degassing chamber being pressurized to a pressure sufficient to remove gas from within the unbonded retreaded tire such that the unbonded retreaded tire is substantially free of gas to provide an unbonded degassed tire. Further, in embodiments, the method may include disassembling the degassing assembly by separating the unbonded degassed tire from the flexible degassing membrane and bonding the unbonded degassed tire to form a bonded retreaded tire by pressurizing a curing chamber and sufficiently heating the curing chamber to cure the bonding layer of the unbonded degassed tire.

The process may include providing an unbonded retreaded tire, which is preassembled and comprises a pre-cured tread arranged annularly around an outer circumference of an annular tire carcass with a bonding layer comprising uncured bonding material arranged between the pre-cured tread and the annular tire carcass, the unbonded retreaded tire having a thickness extending between inner and outer sides of the unbonded retreaded tire, where the annular tire carcass comprises a pair of sidewalls spaced apart in an axial direction of the unbonded retreaded tire, each of the pair of sidewalls extending radially inward from an undertread portion to a bead portion. Particular embodiments of the process further include forming a degassing assembly comprising a flexible degassing membrane at least partially arranged around an outer circumference of the unbonded retreaded tire to form one or more vacuum chambers that as a collective substantially surround the inner and outer sides of the unbonded retreaded tire and placing the each of the one or more vacuum chambers under at least partial vacuum pressure. The process, in embodiments, may also include performing a degassing operation by pressurizing a degassing chamber while each of the one or more vacuum chambers in the degassing assembly are at least under partial vacuum pressure, the degassing chamber being pressurized to a pressure sufficient to remove gas from within the unbonded retreaded tire such that the unbonded retreaded tire is substantially free of gas to provide an unbonded degassed tire. In addition, the process may include disassembling the degassing assembly by separating the unbonded degassed tire from the flexible degassing membrane and bonding the unbonded degassed tire to form a bonded retreaded tire by pressurizing a curing chamber and sufficiently heating the curing chamber to cure the bonding layer of the unbonded degassed tire.

The foregoing and other objects, features, and advantages of the invention will be apparent from the following more detailed descriptions of particular embodiments of the invention, as illustrated in the accompanying drawings wherein like reference numbers represent like parts of the invention.

### BRIEF DESCRIPTION OF THE DRAWINGS

Fig. **1** is a flow chart describing a method of forming a retreaded tire including degassing and curing operations in accordance with an embodiment invention.
Fig. **2** is an exploded view of a degassing assembly in accordance with an embodiment of the invention.
Fig. **3** is a view of a degassing assembly in accordance with an embodiment of the invention.
Fig. **4** is a perspective view of a degassing assembly in accordance with an embodiment of the invention.
Fig. **5** is a view of a degassed tire in a curing chamber in accordance with an embodiment of the invention.
Fig. **6** is a view of a control system for use controlling or automating one or more aspects of the invention.

### DETAILED DESCRIPTION OF PARTICULAR EMBODIMENTS

Particular embodiments of the invention include methods of forming a retreaded tire.

Such methods include providing an unbonded retreaded tire, which comprises a pre-cured tread arranged annularly around an outer circumference of an annular tire carcass with a bonding layer comprising uncured bonding material arranged between the pre-cured tread and the annular tire carcass. The unbonded retreaded tire has a thickness extending between inner and outer sides of the unbonded retreaded tire. The annular tire carcass comprises a pair of sidewalls spaced apart in an axial direction of the tire, each of the pair of sidewalls extending radially inward from an undertread portion to a bead portion. The outer side of the unbonded retreaded tire may also be described as having a first lateral portion and a second lateral portion, which are spaced apart and arranged on opposing axial sides of the tire. Accordingly, the first lateral portion includes a first sidewall and associated bead portion and the second lateral portion includes a second sidewall and associated bead portion. It is appreciated that the unbonded retreaded tire may be assembled by any method known to one of ordinary skill in the art.

Such methods further includes forming a degassing assembly by arranging a flexible degassing membrane around an outer circumference of the unbonded retreaded tire, the degassing assembly having one or more vacuum chambers that as a collective substantially surround at least the outer side of the unbonded retreaded tire. By providing the one or more vacuum chambers that substantially surround the outer side of the unbonded retreaded tire, any gas contained within the tire is evacuated or removed when placing the one or more vacuum chambers under vacuum pressure or at least partial vacuum pressure. As used herein, a "vacuum chamber" is any volume or interface between materials in contact (*e.g*., when a degassing membrane is under at least partial vacuum pressure and collapses onto a tire by way of suction such that volume defined between them is insignificant) substantially fluidly isolated from an environment outside the chamber by substantially-impermeable materials around the chamber.

In forming the degassing assembly, a flexible curing membrane is arranged at least partially around an outer circumference of the unbonded retreaded tire. In doing so, the degassing membrane partially or fully extends about a cross-sectional perimeter of the tire. In either case, the degassing membrane may comprise a single portion or multiple portions. For example, in particular embodiments, the degassing membrane comprises a first portion configured to be arranged about a first lateral portion of the outer side of the unbonded retreaded tire, and a second portion of the flexible degassing membrane configured to be arranged about a second lateral portion of the outer side of the unbonded retreaded tire, where the first portion of the flexible degassing membrane and the second portion of the flexible degassing membrane at least partially form one of the one or more vacuum chambers extending along the outer side of the tire from a first bead portion to a second bead portion of the unbonded retreaded tire. In the instant embodiment, this membrane comprising first and second portions is a two-piece membrane, although in other embodiments additional portions may be employed.

In an embodiment, the step of forming a degassing assembly further comprises mounting the unbonded retreaded tire on a wheel before arranging the flexible degassing membrane around the outer circumference of the unbonded retreaded tire, where the wheel forms an inner cavity along the inner side of the tire between the wheel and the tire extending approximately from the first bead portion to the second bead portion. To facilitate degassing of the unbonded retreaded tire, it is appreciated that the inner cavity may be arranged in fluid communication with pressure source, such as a compressor or pressurized gas vessel, for example, and pressurized to a desired pressure.

"Inner cavity" is described herein as the open space defined within a tire carcass between the unbonded retreaded tire and wheel on which the tire is mounted. This space can be filled at least in part by an inflatable bladder when inflated. It is understood that an inner cavity may coincide with a second or inner vacuum chamber in embodiments not employing an inflatable bladder, or may be a portion of that space or interface between an inflatable bladder and the inside of the tire carcass in embodiments utilizing such components.

In particular embodiments, an inflatable bladder is arranged in the inner cavity, the inflatable bladder being configured to expand and thereby apply forces against the inner side of the tire, such that the step of performing a degassing operation includes inflating or pressurizing the inflatable bladder to expand and thereby apply a force against the inner side of the tire. The inflatable bladder is arranged in fluid communication with a pressure source to facilitate inflation or pressurization. It is noted that this force applied to the inner side of the tire assists in removing gas arranged within the unbonded retreaded tire.

In further embodiments, where the tire is mounted on a wheel and the inflatable bladder is arranged within the inner cavity, the inner cavity comprises one of the one or more vacuum chambers such that in the step of placing each of the one or more vacuum chambers under at least partial vacuum pressure, the inner cavity is placed at least under partial vacuum pressure. It is understood that the inner cavity and any of the other one or more vacuum chambers arranged along the outer side of the tire are arranged in fluid communication with a vacuum source. For example, the inner cavity and any of the other one or more vacuum chambers arranged along the outer side of the tire is arranged in fluid communication with separate vacuum sources or separately arranged in fluid communication with the same vacuum source. By further example, in particular embodiments, the inner cavity is arranged in fluid communication with at least one or all of the one or more vacuum chambers arranged along the outer side of the tire, such that placing any one of such chambers in fluid communication with a vacuum source places all of the chambers in fluid communication with the vacuum source. For example, where the tire is mounted on a wheel, the inner cavity can be placed into fluid communication with the one or more vacuum chambers arranged along the outer side of the tire by a wicking agent placed between the inner and outer sides of the tire between the tire bead portion and the wheel, where the wicking agent is an at least partially air-permeable material (comprising a permeable or low-permeability material) such that gas flows between the inner cavity and any of the one or more vacuum chambers arranged along the outer side of the tire. Wicking agent materials can be selected to specifically control the amount or rate of airflow between the chambers.

In order to create a vacuum chamber, terminal edges of the degassing membrane come together or engage another member, such as a wheel, to form a sealing junction and thereby form a vacuum chamber. Such a junction may comprise a joint, an overlap, or a pleat, for example. It is understood that terminal edges of the degassing membrane include terminal edges of different portions of the membrane, such as the first and second portions discussed above. Accordingly, where the degassing membrane comprises first and second portions, the first and the second portions together form a sealing junction. It is appreciated that a sealing junction may not be achieved until the one or more vacuum chambers are placed under vacuum or partial vacuum. It is also understood that a sealing junction may be achieved by mechanically applying structure to forcibly form a sealing junction, such as by clipping or pinching the terminal ends together or in contact with another member, to close a vacuum chamber formed of at least the first and second portions.

It is understood that the flexible degassing membrane is sufficiently sized for its intended purpose in forming one or more vacuum chambers along the outer side of the tire. For example, a membrane may extend substantially around the entire tire, the membrane comprising one or more sections. By further example, the unbonded retreaded tire may be mounted on a wheel and one or more degassing membranes arranged to extend from the wheel and about assembled retread tire and the tread arranged thereon. In such example, a flexible degassing membrane extends along the top side of the tire tread and down each of the pair of tire carcass sidewalls to engage the wheel to form a sealed fluid chamber between the membrane and the tire along the tread and sidewalls. In certain embodiments, the degassing membrane may be a membrane used or designed for curing in embodiments where a degassing assembly is not disassembled prior to curing.

The flexible degassing membrane can be closely sized to differently sized tires, where differently sized tires have different widths, different outer diameters or circumferences, and/or different inner diameters or section heights (which is half of the difference between outer and inner diameters). Therefore, in such embodiments, a flexible degassing membrane is designed for use with a particularly sized tire. In other embodiments, the flexible degassing membrane is sized for use with a plurality of differently sized unbonded retreaded tires, where differently sized tires have any combination of differently sized widths, outer diameters or circumferences, and/or inner diameters or section heights. This way, a single flexible degassing membrane is used to degas different tires without the need to continually replace the flexible degassing membrane when degassing differently sized tires or a range of differently sized tires.

It is understood that the differently sized tires may comprise a range of differently sized tires. In order to utilize different-sized tires, a rim, wheel, or other portion can be configured for the smallest expected tire size to facilitate mounting of the smallest size or larger, and holes in interior members such as sealing structures can be configured to fit over a largest expected tire size. In some embodiments, expandable components or attachments can be utilized to accommodate tires larger than those designed to mount on a wheel or interact with other portions of a degassing system or membrane. For example, a wheel can have a changeable diameter using movable parts and/or inserts to permit mounting tires having different inner diameters. In alternative embodiments, entire components such as a wheel or sealing structure can be exchanged or substituted to accommodate different tire sizes.

The method also includes placing the each of the one or more vacuum chambers under at least partial vacuum pressure. As used herein, "vacuum" and "under vacuum" mean providing a fluid pressure equal to zero psia (pounds per square inch absolute), and "substantial vacuum" or "substantially under vacuum" means 5 to 0 (zero) psia. "Partial vacuum" connotes a pressure less than 14.7 psia, less than 10 psia, less than 8 psia, less than 5 psia, or less than 3 psia. Additional aspects of such methods may further include connecting a fluid passage to the curing membrane of the tire-membrane assembly to place the sealed fluid chamber in fluid communication with a pressurization source (configured to provide positive pressure and/or vacuum pressure as needed). Pressurization sources include compressors or any other device(s) known to one of ordinary skill in the art. While aspects herein are described as one or more separate vacuum and pressure sources, it is understood that such pressure or vacuum can be provided by a single pressurization source.

Thereafter, the method includes performing a degassing operation by pressurizing a degassing chamber while each of the one or more vacuum chambers in the degassing assembly are at least under partial vacuum pressure. The degassing chamber is employed in this fashion by being pressurized to a pressure sufficient to remove gas from within the unbonded retreaded tire such that the unbonded retreaded tire is substantially free of gas to provide an unbonded degassed tire. Specific parameters vary from tire-to-tire in performing the degassing operation. It is understood that the pressure sufficient to remove gas from within the unbonded retreaded tire vary between tire models, as such pressure may for example be dependent upon the tire construction. In an exemplary embodiment, the pressure by which the degassing chamber is pressurized sufficient to remove gas from within the unbonded retreaded tire is at least substantially 6 bar. In such embodiments, when degassing certain tires, the degassing operation is performed in approximately 40 minutes. Alternatively, lower or higher pressures are employed, and different lengths of time are spent on degassing or other operations.

With respect to the step of placing each of the one or more vacuum chambers under at least partial vacuum pressure, this can include placing each of the one or more vacuum chambers under vacuum pressure.

In additional embodiments, methods can include steps related to removing the unbonded degassed tire from the degassing chamber after completing the step of performing the degassing operation.

Still further embodiments of such methods include disassembling the degassing assembly by separating the unbonded degassed tire from the flexible degassing membrane, placing the unbonded degassed tire into the curing chamber after performing the step of disassembling the degassing assembly, and then bonding the unbonded degassed tire to form a bonded retreaded tire by pressurizing a curing chamber and sufficiently heating the curing chamber to cure the bonding layer of the degassed retreaded tire. In such instances, the step of curing is performed without use of any flexible curing membrane arranged fully or partially along the unbonded degassed tire. As such, the tire is exposed to the pressurized and heated gases contained within the curing chamber. In particular instances of such embodiments, the pressure to which the curing chamber is pressurized is a sufficiently high pressure, such as at least 6 bar, for example. Other elevated pressures may be employed when curing different tires. While it is contemplated that the curing operations can occur while the tire is mounted on the wheel, in particular embodiments, the step of disassembling includes dismounting the unbonded degassed tire from the wheel and curing the tire without being mounted on a wheel and without use of any flexible curing membrane. It is also appreciated that the step of disassembly may occur within the degassing chamber or external thereof. For example, the step of disassembly may occur separate from the degassing and curing chambers or even within the curing chamber.

Generally, the degassing and curing chambers each provide a controlled environment where a tire is degassed or bonded, respectively, in accordance with a recipe or formula identifying any combination of one or more pressures and temperatures for certain durations. It is appreciated that degassing and bonding operations can be performed within one or more degassing and/or curing chambers. It is also appreciated that the same or different chambers can be used for degassing and other operations to a tire. Embodiments of such techniques are a departure from earlier curing methods that require use of a curing membrane to remain on the unbonded tire during curing.

Embodiments of the innovation disclosed herein further include bonded retreaded tires produced using the method described above.

Particular embodiments of the methods (and associated systems) discussed above will now be described in further detail below in association with the figures filed herewith exemplifying the performance of the methods in association with particular embodiments of the tread.

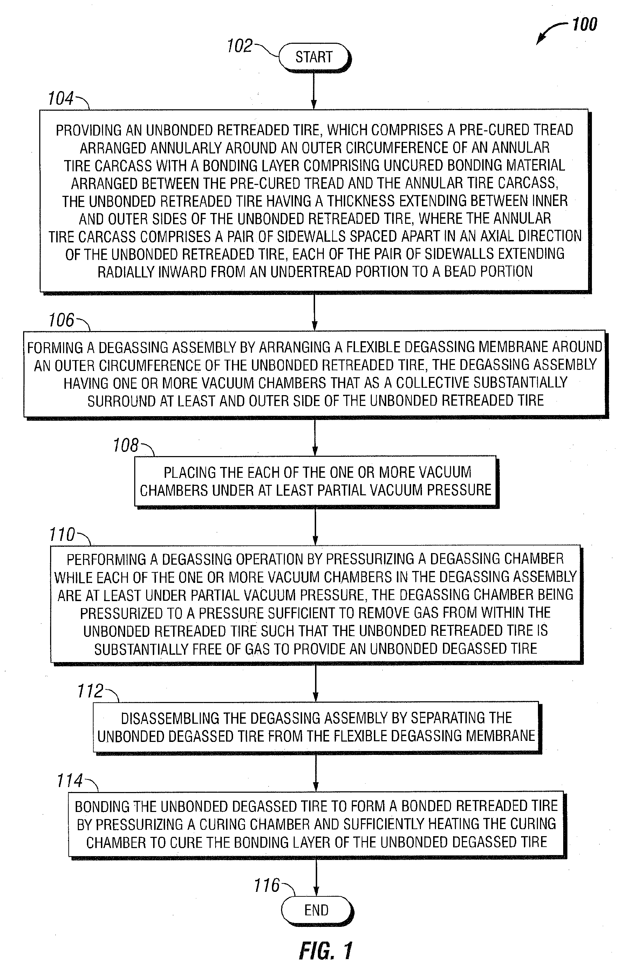

Turning now to Fig. **1****,** a flow chart of a methodology **100** for forming a retreaded tire without use of an envelope or membrane during curing is shown. Methodology **100** begins at **102** and proceeds to **104** where an unbonded retreaded tire assembly is provided. The unbonded, retreaded tire assembly includes a pre-cured tread arranged annularly around an outer circumference of an annular tire carcass. In embodiments, at least these portions of the unbonded retreaded tire are provided preassembled. A bonding layer is disposed between the pre-cured tread and annular tire carcass. The bonding layer includes at least uncured bonding material. The unbonded retreaded tire can be defined in terms of a thickness extending between inner and outer sides of the unbonded retreaded tire, where the annular tire carcass comprises a pair of sidewalls spaced apart in an axial direction of the tire, and each of the pair of sidewalls extend radially inward from an undertread portion to a bead portion.

Once an appropriate unbonded retreaded tire assembly is provided at **104,** a degassing assembly is formed at **106** by arranging a flexible degassing membrane about at least a portion of the unbonded retreaded tire assembly. Specifically, the flexible degassing membrane is at least partially configured to surround an outer circumference of the unbonded retreaded tire to form one or more vacuum chambers that substantially surround the inner and outer sides of the unbonded retreaded tire. A first vacuum chamber is disposed around the outer side (*e.g*., tread and sidewalls) of the unbonded retreaded tire, and a second vacuum chamber can be disposed on an inner opposite side of the unbonded retreaded tire. As both sides of the tire are continuous, the interface separating the outer portion and the inner portion is the point at which the tire rests on the rim, or the tire bead. Put another way, the one or more vacuum chambers defined during **106** surround the unbonded retread tire annularly, and laterally from bead-to-bead.

In embodiments, the degassing membrane can be a two-piece membrane including a first portion and a second portion that are securedly coupled when arranged about an unbonded retread tire assembly. The unbonded retread tire assembly is mounted on a wheel. Further, a pressurizable bladder may be provided within the tire but outside the flexible degassing membrane (*e.g*., disposed in an inner cavity defined by the tire carcass and wheel), which when inflated approaches or contacts at least the flexible degassing membrane within the unbonded retreaded tire after forming the degassing assembly.

In embodiments having two or more vacuum chambers, the vacuum chambers are place in at least partial fluid communication by use of a wicking agent. In an embodiment, the wicking agent permits airflow between a vacuum chamber inside of a tire and a vacuum chamber outside of a tire on a rim, such that a single vacuum source pulls air from both.

At **108,** vacuum pressure is applied to each of the one or more vacuum chambers. Placing the chambers under vacuum pressure includes pulling air out of the chambers. The air is pulled by one or more vacuum sources in fluid communication with the chamber(s).

After the one or more vacuum chambers are placed under vacuum pressure, methodology **100** proceeds to **110** where a degassing operation is performed. The degassing operation includes at least pressurizing the degassing chamber while each of the one or more vacuum chambers in the degassing assembly are at least under partial vacuum pressure. At least partial vacuum pressure includes or is equivalent to vacuum pressure in some embodiments. Further, in specific embodiments, the degassing chamber is also brought to a degassing temperature during degassing operations.

The degassing chamber is pressurized to a pressure sufficient to remove gas from within the unbonded retreaded tire such that the unbonded retreaded tire is substantially free of gas. "Substantially free of gas" refers to a situation where the degassing membrane is suctioned to the tire with no remaining air pockets capable of adversely influencing the degassing (or subsequent curing) operation(s), and where pockets of gas between portions of the unbonded retreaded tire (*e.g*., tread, bonding layer, carcass) are reduced or eliminated. After the degassing operation is complete, an unbonded degassed tire is produced.

At **112,** the degassing assembly is disassembled. Disassembly includes separating the unbonded degassed tire from the flexible degassing membrane. Other aspects of disassembly can include detaching vacuum or pressure sources, removal of wicking agents, movement or reorientation, and others.

Thereafter at **114,** the unbonded degassed tire is cured to form a bonded retreaded tire. Curing occurs in a curing chamber that is pressurized and heated according to curing parameters. The curing parameters are based on, for example, the type of bonding material, the amount of bonding material, the size or material of the carcass, the size or material of the tread, the model or line of retreaded tire (*e.g*., standard or premium), a curing time (*e.g.*, increase or decrease production speed), and other factors. Upon completion of step **114,** the tire is a bonded retreaded tire.

Variations of such methods are further discussed above in accordance with different embodiments.

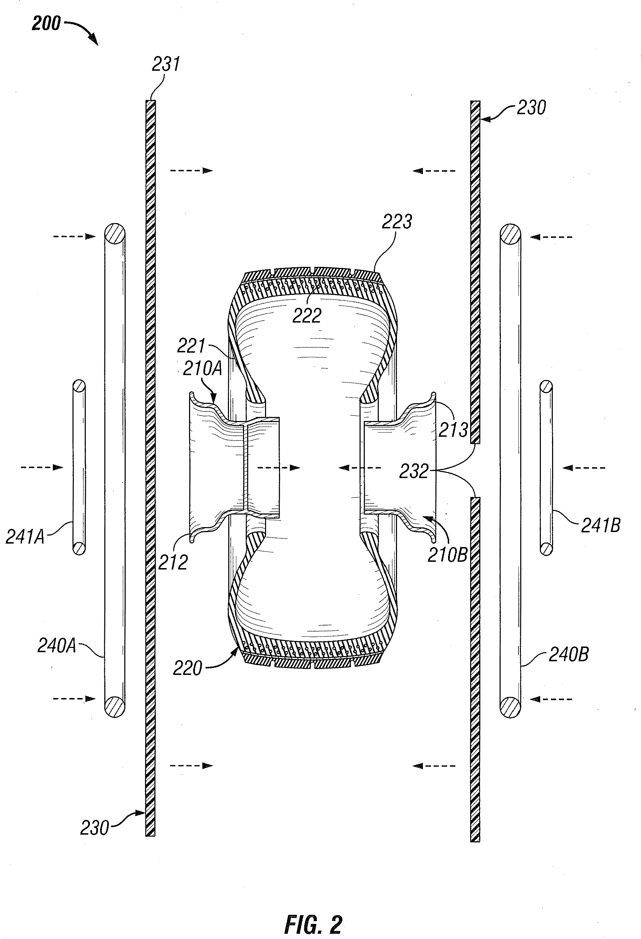

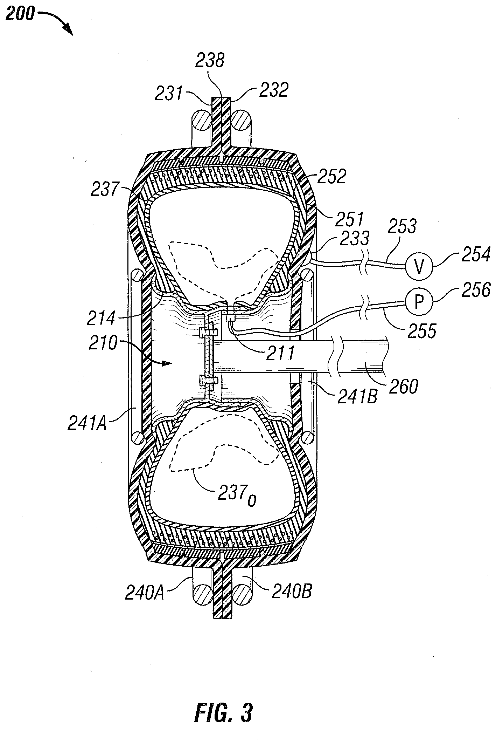

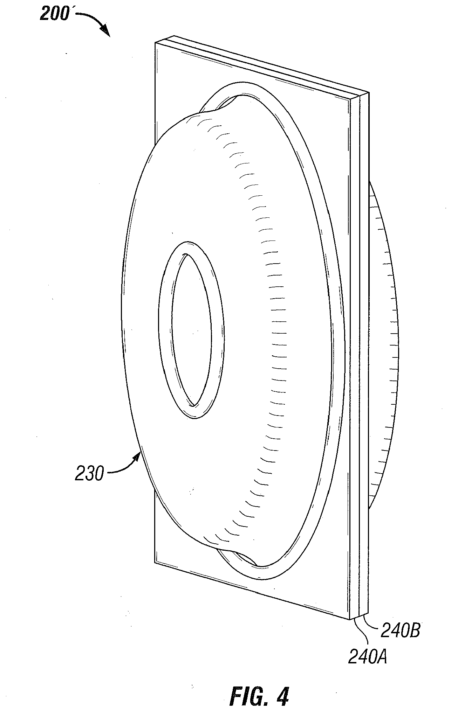

With respect to Figs. **2-4****,** an exemplary embodiment of degassing assembly **200** is shown. With reference to Fig. **2****,** various components of degassing assembly **200** are shown prior to assembly while Figs. **3** and **4** show degassing assembly **200** in an assembled arrangement in accordance with an exemplary embodiment.

In particular, degassing assembly **200** includes (assembled) unbonded retreaded tire **220** mounted on wheel **210.** Unbonded retreaded tire **220** is surrounded by degassing membrane **230,** and, in combination, unbonded retreaded tire **220** and degassing membrane **230** form first vacuum chamber **251** and second vacuum chamber **252.**

Unbonded retreaded tire **220** includes at least tire carcass **221,** bonding layer **222,** and tread **223.** Bonding layer **222** includes one or more uncured bonding materials disposed between tire carcass **221** and tread **223.** Tread **223** is a pre-cured tread arranged annularly around an outer circumference of an annular tire carcass. In embodiments, unbonded retreaded tire **220** can be provided preassembled (*e.g*., tire carcass **221,** bonding layer **222,** and tread **223** coupled when provided). Alternatively, additional steps associated with forming or degassing unbonded retreaded tire **220** comprise assembling the individual components provided separately.

Wheel **210** can be specially configured for degassing operations. For example, wheel **210** can include a pressure interface **211** adapted to permit filling of inflatable bladder **237** (shown un-inflated as **237**ₒ). Additionally, the flanges, edges, or rim portion of wheel **210** can be adapted for use with unbonded retreaded tire **220** and degassing membrane **230.** For example, one or both rim flanges can be configured to provide specialized support for a tire bead, or facilitate airtight securing of degassing membrane **230.** In alternative embodiments, wheel **210** is a wheel typically used in operation with the tire type of unbonded retreaded tire **220,** and standard aspects (*e.g.,* wheel air valve) are adapted for use in degassing operations.

With continued reference to Figs. **2-4****,** degassing membrane **230** is sized for use with a plurality of different sized tires (*i.e.,* unbonded retreaded tire **220**) and configured to be arranged about unbonded retreaded tire **220** such that first vacuum chamber **251** and second vacuum chamber **252** are sealed and capable of maintaining at least partial vacuum pressure.

As noted herein, degassing membrane **230** can comprise a plurality of portions. In the illustrated embodiments, degassing membrane **230** includes at least first membrane portion **231** and second membrane portion **232.** In alternative embodiments, first membrane portion **231** and/or second membrane portion **232** can be secured to wheel **210** using a rim attachment component which sealably couples first membrane portion **231** and/or second membrane portion **232** to a rim or edge of wheel **210.** Rim attachment components can ensure a fluid seal between degassing membrane **230** and impermeable portions of the rim where a multi-part degassing membrane includes discontinuities at such locations.

While each of first membrane portion **231** and second membrane portion **232** may be configured to extend at least partially across an entire lateral side of a tire, first membrane portion **231** is configured to extend across an entire lateral side of the tire and wheel while the second membrane portion **232** is configured to extend partially across a second lateral side of the tire and wheel. In particular, the second membrane portion **232** is configured to extend from an outer circumference of the tire to at least a circumferential portion of the lateral side of the wheel to allow a wheel support **260** (as illustrated in Fig. **3**) to access to the wheel to which it is operably attached. It is appreciated that either of first membrane portion **231** and second membrane portion **232** may in turn be formed of multiple separate portions (*e.g*., second membrane portion **232** in two portions as-depicted).

First membrane portion **231** and second membrane portion **232** meet at sealing junction **238.** Sealing junction **238** may comprise a joint, an overlap, or a pleat, for example. It is understood that terminal edges of the degassing membrane include terminal edges of different portions of the membrane. Sealing junction **238** may not be properly established until the one or more vacuum chambers are placed under vacuum or partial vacuum.

As discussed above, the curing membrane is configured to be sufficiently sealed to maintain at least partial vacuum pressure within the vacuum chamber. In the embodiment shown, sealing structures **240A** and **240B** are employed alone or in combination with to form sealing junction **238** between first membrane portion **231** and second membrane portion **232,** whereby the sealing structures force the first and second lateral portions into contact. The embodiment shown also includes sealing structures **241A** and **241B,** which are also employed to force the first membrane portion **231** and second membrane portion **232** respectively against wheel **210.** In lieu of sealing structures articulating between sealed and unsealed arrangements, one or both of the first and second lateral portions may be permanently or temporarily attached in a sealed arrangement to the wheel by a sealing structure.

Alternatively, it is also understood that a sealing junction may be created in particular embodiments by mechanically applying structure to forcibly form a sealing junction, such as by clipping or pinching the terminal ends together or in contact with another member, to close a vacuum chamber formed of at least the first and second portions. For example, first membrane portion **231** and second membrane portion **232** may be sealably connected to one another using a membrane portion connector. A membrane portion connecter can be used as a substitute for sealing structures **240** and/or **241,** and can include clips, pinches, adhesives, zippers, snaps, and other structures or techniques known in the art. While first membrane portion **231** and second membrane portion **232** are shown as substantially symmetrical and connecting approximately half-way about the exterior bead-to-bead path, toward the middle of tread **223,** it is understood that other configurations (*e.g*., asymmetrical arrangements) can be employed without departing from the scope or spirit of the innovation.

Wicking agent **214** can be provided between unbonded retreaded tire **220** and wheel **210.** Wicking agent **214** creates one or more points of fluid communication between first vacuum chamber **251** and second vacuum chamber **252.** In this way, vacuum interface **233** operates to remove air from both first vacuum chamber **251** and second vacuum chamber **252** while only being directly connected to one (*e.g.,* via vacuum interface **233,** depicted in the illustrated embodiment as connected to first vacuum chamber **251.**

In some embodiments, degassing assembly **200** further includes inflatable bladder **237** (also shown deflated in dashed lines). Inflatable bladder **237** is disposed within unbonded retreaded tire **220,** and specifically be on an inner cavity of tire carcass **221** and wheel **210.** Inflatable bladder **237** can be inflated and pressurized using pressure provided through pressure interface **211.** Inflatable bladder **237** fills at least a portion of the space within the tire, reducing the volume of second vacuum chamber **252.** In embodiments, inflatable bladder **237** prevents deformation of unbonded retreaded tire **220** potentially caused by at least partial vacuum pressure in second vacuum chamber **252,** or otherwise assist with forming or supporting unbonded retreaded tire **220.**

In specific embodiments, degassing assembly **200** includes a single first vacuum chamber **251** but no other vacuum chambers. For example, inflatable bladder **237** can be inflated to fill all or substantially all of the inner cavity defined within carcass **221** (the open space defined within carcass **221** between unbonded retreaded tire **220** and wheel **210** when inflatable bladder **237** is uninflated). Some such embodiments may still employ wicking agent **214** to eliminate or prevent the existence of second vacuum chamber **252** by permitting airflow through first vacuum chamber **251** such that inflatable bladder **237** fits tightly to carcass **221** and/or wheel **210.** In alternative embodiments, vacuum chamber **251** is fluidly sealed from the inner cavity of carcass **221.**

Degassing assembly **200** utilizes vacuum source **254** and pressure source **256.** Vacuum source **254** is connected to degassing membrane **230** via vacuum conduit **253,** which couples with vacuum interface **233** to allow the removal of air from at least one of first vacuum chamber **251** and second vacuum chamber **252.** Similarly, pressure source **256** is connected to inflatable bladder **237** using pressure conduit **255,** which couples with pressure interface **211.** Conduits herein can include one or more of hoses, pipes, or other components typically used for applications related to systems for modifying air pressure in a sealed chamber. While these aspects are shown as single components, it is understood that two or more vacuum and/or pressure sources, and multiple vacuum and/or pressure interfaces can be utilized *(e.g.,* two vacuum sources and two vacuum interfaces to separately apply at least partial vacuum pressure to first vacuum chamber **251** and second vacuum chamber **252** with or without wicking agents). Further vacuum source **254** and pressure source **256** can be utilized in other operations (*e.g*., pressure source **256** also pressurizes a degassing or curing chamber) without departing from the scope or spirit of the innovation disclosed herein.

Fig. **4** in particular shows an assembled perspective view of degassing assembly **200.** The view provided of degassing assembly **200** illustrates the contours of wheel **210** and unbonded retreaded tire **220** as covered by degassing membrane **230.** At least sealing structures **240A** and **240B** are shown about degassing membrane **230.**

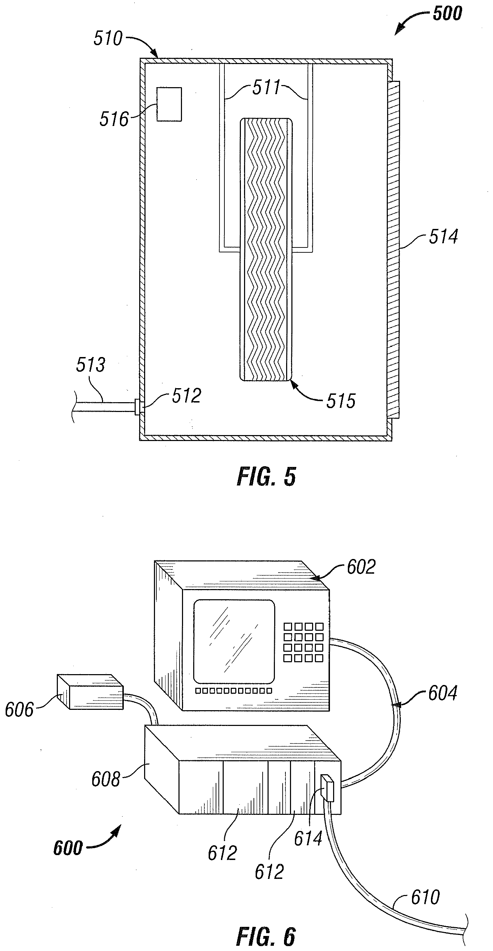

Fig. 5 depicts an example embodiment of a system **500** showing an unbonded degassed tire in a curing chamber **510.** Curing chamber **510** includes one or more suspension members **511** used to suspend an unbonded degassed tire **515.** Unbonded degassed tire **515** can be a degassed tire from degassing assembly **200** after disassembly subsequent to degassing operations. In various embodiments, unbonded degassed tire **515** can be removed from wheel **210,** or remain on wheel **210.**

Curing chamber **510** additionally includes curing pressure supply **512,** which is coupled with curing pressure line **513** to reach a pressure source which facilitates pressurization of curing chamber **510.** Further, curing chamber **510** includes heating element **516** which is used to heat curing chamber **510** to a curing temperature, or other temperatures.

Curing chamber **510** can additionally include curing chamber door **514.** Curing chamber door **514** can be opened or closed to access unbonded degassed tire **515** (or a subsequently cured tire) or other components. While curing chamber door **514** is shown in a particular orientation, it is understood that such a configuration is not required to practice aspects of the disclosed innovation. For example, in particular embodiments the door takes up a larger portion of a chamber, such as where the door occupies or replaces an entire side or hemisphere of the chamber.

In embodiments, degassing chamber **310** and curing chamber **510** are the same chamber. In such embodiments, one of ordinary skill in the art will appreciate how the same or different components can be adapted or utilized to perform both degassing and curing in the same chamber.

This disclosure includes various controls, including automation, to effect steps or manage components of aspects herein. Fig. **6** illustrates a view of a controller **600** for use controlling or automating one or more aspects of the invention. Controller **600** includes user interface **602** which provides visualization and/or control surfaces to monitor or modify functioning of aspects herewith. For example, one or more of applying or removing a degassing membrane, increasing or reducing pressure in one or more chambers or bladders, changing a temperature in a sealed environment, opening or closing chambers, monitoring time, conveying tires or other objects between locations, and initiating or ceasing various degassing or curing operations can be controlled via user interface **602** or other portions of controller **600.**

Controller **600** can be in communication with a computing system over a suitable communications link. The communications link can include any number or combination of wired or wireless communication links. For instance, the communication link can include RF communication link, a network (*e.g*. LAN, WAN, SAN, wireless, cellular, etc.), or other suitable communication link. Connections may be established with respect to both hardware applications and implementation in connection with a computing device (including a mobile networking apparatus) that includes hardware, software, or, where appropriate, a combination of both.

The computing system can be any suitable computing system and can include one or more of any type of computer, computer systems or other programmable computing device, including a client computer, a server computer, an on-vehicle computing system, a desktop, a portable computer (including a laptop and a tablet), a handheld computer, a mobile phone (including a smartphone), a PDA, a display with one or more processors, a gaming device, an embedded controller, a near-field communication device, a device with applications implemented at least partly using a cloud service, and any combination and/or equivalent thereof (including touchless devices). Moreover, a computing device may be implemented using one or more networked computers, *e.g*., in a cluster or other distributed computing system.

Controller **600** generally receives signal responses from sensors related to degassing or curing chambers to monitor and help control the operation of systems or execution of methods herein. Controller **600** can include at least one logic processor **608** and a memory/media device **606.** The processor **608** can be any suitable processing device, such as a microprocessor, microcontroller, integrated circuit or other suitable processing device. The memory/media element can include single or multiple portions of one or more varieties of non-transitory computer-readable media, including, but not limited to, RAM (random access memory), ROM (read-only memory), PROM (programmable read-only memory), hard drives, flash drives, optical media, magnetic media or other memory devices. The memory media element may include at least one input/output (I/O) cable **610** for communicating with systems described herein. Further, controller may include an I/O slot **612** for housing an I/O card having I/O cable connector **614.**

Controller **600** generally receives signal responses from sensors related to degassing or curing chambers to monitor and help control the operation of systems or execution of methods herein. Controller **600** includes a logic processor **608,** which may be a microprocessor, a memory storage device **606,** such as RAM (random access memory), ROM (read-only memory), PROM (programmable read-only memory), and at least one input/output (I/O) cable **610** for communicating with systems described herein. Further, controller may include an I/O slot **612** for housing an I/O card having I/O cable connector **614.**

An operator may utilize a user-interface **602** to monitor sensor measurements or the performance of systems and methods disclosed herein, and to program (or otherwise control or instruct), the operation of controller **600** and, for example, degassing assembly **200** (and associated degassing components), which includes performing each step and method associated with degassing and/or curing as detailed herein. User-interface **602** and controller **600** may communicate by way of I/O cable **604.** It is also contemplated that wireless communications may exist between controller **600,** user-interface **602,** and, for example, degassing assembly **200** (or other systems described herein).

Generally, controller **600** may be programmed by any known graphical or text language. Programmed instructions, data, input, and output may be stored in a memory storage device **606,** which is accessible to processor **608.** Memory device **606** may comprise any commercially known storage device, such as such as hard disk drives, optical storage devices, flash memory, and the like. Processor **608** executes programmed instructions and may perform the distance calculations and measurements, as wells as other operations, discussed herein. Memory storage device **606** also stores inputs, outputs, and other information, such as, for example, specifications or recipes for degassing or curing, for use by processor **608** in performing its operations. In addition to performing distance conversions and measurements, controller **600** may also be programmed to generate various instructions related to degassing or curing based upon received input. Using such aspects, degassing and/or curing operations may be automatically controlled based on stored recipes or routines or may be manually controlled by an operator or supervisor.

In particular, specific embodiments permit automated assembly and disassembly of degassing assembly **200,** as well as mounting or dismounting of tire **220** on wheel **210.** Other aspects of assembly or disassembly can be accomplished automatically or by use of machine assistance as controlled by controller **600,** and various machine components can effect instructions from controller **600** to complete fully or partially automated techniques described herein.

The present invention may be utilized in association with retreaded tires, which may be utilized on particular types of vehicles or in specific applications. Nevertheless, the present invention may be utilized in association with any type of tire to form new or retreaded tire and as such, any type of tire may provide an embodiment of the present invention. Exemplary tire types for use with the subject invention further include light truck tires, heavy truck tires, off the road tires, bus tires, aircraft tires, bicycle tires, motorcycle tires, and passenger vehicle tires.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (*i.e.,* not required) feature of the invention. Ranges that are described as being "between a and b" are inclusive of the values for "a" and "b" unless otherwise specified.

While this invention has been described with reference to particular embodiments thereof, it shall be understood that such description is by way of illustration only and should not be construed as limiting the scope of the claimed invention. Accordingly, the scope and content of the invention are to be defined only by the terms of the following claims. Furthermore, it is understood that the features of any specific embodiment discussed herein may be combined with one or more features of any one or more embodiments otherwise discussed or contemplated herein unless otherwise stated.

## Claims

1. A method of forming a retreaded tire comprising:
providing an unbonded retreaded tire (220), which comprises a pre-cured tread (223) arranged annularly around an outer circumference of an annular tire carcass (221) with a bonding layer (222) comprising an uncured bonding material arranged between the pre-cured tread and the annular tire carcass, the unbonded retreaded tire having a thickness extending between an inner and an outer side of the unbonded retreaded tire, where the annular tire carcass comprises a pair of sidewalls spaced apart in an axial direction of the unbonded retreaded tire, each of the pair of sidewalls extending radially inward from an undertread portion to a bead portion;
forming a degassing assembly by arranging a flexible degassing membrane (230), (231) around an outer circumference of the unbonded retreaded tire, the degassing assembly having one or more vacuum chambers that as a collective substantially surround at least an outer side of the unbonded retreaded tire;
placing each of the one or more vacuum chambers under at least partial vacuum pressure;
performing a degassing operation by pressurizing (256) a degassing chamber while each of the one or more vacuum chambers in the degassing assembly are at least under partial vacuum (254) pressure, the degassing chamber being pressurized to a pressure sufficient to remove gas from within the unbonded retreaded tire such that the unbonded retreaded tire is substantially free of gas to provide an unbonded degassed tire;
disassembling the degassing assembly by separating the unbonded degassed tire from the flexible degassing membrane; and
bonding the unbonded degassed tire to form a bonded retreaded tire by pressurizing a curing chamber (510) and sufficiently heating the curing chamber to cure the bonding layer of the unbonded degassed tire.

2. The method of claim 1, where the step of forming a degassing assembly further comprises:
arranging a first portion of the flexible degassing membrane about a first lateral portion of the outer side of the unbonded retreaded tire; and
arranging a second portion of the flexible degassing membrane about a second lateral portion of the outer side of the unbonded retreaded tire, where the first portion of the flexible degassing membrane and the second portion of the flexible degassing membrane at least partially form one of the one or more vacuum chambers extending along the outer side of the unbonded retreaded tire from a first bead portion to a second bead portion of the unbonded retreaded tire.

3. The method of claim 2, where the first portion and the second portion together form a sealing junction along a tread portion of the outer side.

4. The method of claim 1, where the flexible degassing membrane is sized for use with a plurality of differently sized unbonded retreaded tires.

5. The method of claim 2, where the step of forming a degassing assembly further comprises mounting the unbonded retreaded tire on a wheel before arranging the flexible degassing membrane around the outer circumference of the unbonded retreaded tire, where the wheel forms an inner cavity along the inner side of the unbonded retreaded tire between the wheel and the unbonded retreaded tire extending approximately from the first bead portion to the second bead portion, and where an inflatable bladder is arranged in the inner cavity, the inflatable bladder being configured to expand and thereby apply forces against the inner side of the unbonded retreaded tire, and in the step of performing a degassing operation includes inflating the inflatable bladder to expand and thereby apply a force against the inner side of the unbonded retreaded tire.

6. The method of claim 1, where the step of forming a degassing assembly further comprises mounting the unbonded retreaded tire on a wheel before arranging the flexible degassing membrane around the outer circumference of the unbonded retreaded tire, where the wheel forms an inner cavity along the inner side of the unbonded retreaded tire between the wheel and the unbonded retreaded tire extending approximately from the first bead portion to the second bead portion, and where an inflatable bladder is arranged in the inner cavity, the inflatable bladder being configured to expand and thereby apply forces against the inner side of the unbonded retreaded tire, and in the step of performing a degassing operation includes inflating the inflatable bladder to expand and thereby apply a force against the inner side of the unbonded retreaded tire.

7. The method of claim 6, where the inner cavity comprises one of the one or more vacuum chambers such that in the step of placing each of the one or more vacuum chambers under at least partial vacuum pressure, the inner cavity is placed at least under partial vacuum pressure.

8. The method of claim 7, where the inner cavity is in fluid communication with at least one vacuum chamber of the one or more vacuum chambers arranged along the outer side of the unbonded retreaded tire.

9. The method of claim 6, where the unbonded retreaded tire is dismounted from the wheel in the step of disassembling.

10. The method of claim 1, further comprising the step of arranging an inflatable bladder within an inner cavity of the unbonded retreaded tire, the inner cavity arranged adjacent the inner side of the unbonded retreaded tire, where the step of performing a degassing operation includes inflating the inflatable bladder to sufficiently apply a force against the inner side of the unbonded retreaded tire.

11. The method of claim 1, where the pressure by which the degassing chamber is pressurized sufficient to remove gas from within the unbonded retreaded tire is at least substantially 6 bar.

12. The method of claim 11, where the degassing operation is performed in approximately 40 minutes.

13. The method of claim 11, where the pressure by which the curing chamber is pressurized in the step of bonding is at least substantially 6 bar.

14. The method of claim 13, where the step of placing each of the one or more vacuum chambers under at least partial vacuum pressure comprises placing each of the one or more vacuum chambers under vacuum pressure.

15. The method of claim 1, further comprising: removing the unbonded degassed tire from the degassing chamber after completing the step of performing the degassing operation; and placing the unbonded degassed tire into the curing chamber after performing the step of disassembling the degassing assembly.

## Patentansprüche

1. Verfahren zur Herstellung eines runderneuerten Reifens, umfassend die folgenden Schritte:
Bereitstellen eines unverklebten runderneuerten Reifens (220), der eine vorgehärtete Lauffläche (223) umfasst, die ringförmig um einen Außenumfang einer ringförmigen Reifenkarkasse (221) angeordnet ist, wobei eine Bindeschicht (222) aus einem ungehärteten Bindematerial zwischen der vorgehärteten Lauffläche und der ringförmigen Reifenkarkasse angeordnet ist, wobei der ungehärtete runderneuerte Reifen eine sich zwischen einer Innenseite und einer Außenseite des unverklebten runderneuerten Reifens erstreckende Dicke besitzt, wobei die ringförmige Reifenkarkasse zwei in axialer Richtung des unverklebten runderneuerten Reifens voneinander beabstandete Seitenwände umfasst, wobei sich jede der beiden Seitenwände radial einwärts von einem Basisgummiabschnitt zu einem Wulstabschnitt erstreckt;
Bilden einer Entgasungsbaugruppe durch Anordnen einer flexiblen Entgasungsmembran (230, 231) um einen Außenumfang des unverklebten runderneuerten Reifens, wobei die Entgasungsbaugruppe eine oder mehrere Vakuumkammern besitzt, die als Kollektiv mindestens eine Außenseite des unverklebten runderneuerten Reifens im Wesentlichen umgeben;
Beaufschlagen einer jeden der ein oder mehr Vakuumkammern mit mindestens einem partiellen Unterdruck;
Durchführen eines Entgasungsvorgangs, indem eine Entgasungskammer mit Druck beaufschlagt wird (256), während eine jede der ein oder mehr Vakuumkammern in der Entgasungsbaugruppe mindestens unter einem partiellen Unterdruck (254) steht, wobei die Entgasungskammer auf einen Druck gebracht wird, der ausreicht, um Gas aus dem Inneren des unverklebten runderneuerten Reifens zu entfernen, so dass der unverklebte runderneuerte Reifen im Wesentlichen frei ist von Gas, um einen unverklebten entgasten Reifen bereitzustellen;
Zerlegen der Entgasungsbaugruppe, indem der unverklebte entgaste Reifen von der flexiblen Entgasungsmembran getrennt wird; und
Verkleben des unverklebten entgasten Reifens, um einen verklebten runderneuerten Reifen zu bilden, indem eine Härtungskammer (510) mit Druck beaufschlagt wird und die Härtungskammer ausreichend erwärmt wird, um die Bindeschicht des unverklebten entgasten Reifens zu härten.

2. Verfahren nach Anspruch 1, wobei der Schritt des Bildens einer Entgasungsbaugruppe ferner Folgendes umfasst:
Anordnen eines ersten Abschnitts der flexiblen Entgasungsmembran um einen ersten seitlichen Abschnitt der Außenseite des unverklebten runderneuerten Reifens; und
Anordnen eines zweiten Abschnitts der flexiblen Entgasungsmembran um einen zweiten seitlichen Abschnitt der Außenseite des unverklebten runderneuerten Reifens, wobei der erste Abschnitt der flexiblen Entgasungsmembran und der zweite Abschnitt der flexiblen Entgasungsmembran wenigstens teilweise eine der ein oder mehr Vakuumkammern bilden, die sich entlang der Außenseite des unverklebten runderneuerten Reifens von einem ersten Wulstabschnitt zu einem zweiten Wulstabschnitt des unverklebten runderneuerten Reifens erstrecken.

3. Verfahren nach Anspruch 2, wobei der erste Abschnitt und der zweite Abschnitt zusammen eine dicht schließende Verbindung entlang eines Laufflächenabschnitts der Außenseite bilden.

4. Verfahren nach Anspruch 1, wobei die flexible Entgasungsmembran zur Verwendung mit einer Vielzahl von unverklebten runderneuerten Reifen unterschiedlicher Größe bemessen ist.

5. Verfahren nach Anspruch 2, wobei der Schritt des Bildens einer Entgasungsbaugruppe ferner das Montieren des unverklebten runderneuerten Reifens auf einem Rad umfasst, bevor die flexible Entgasungsmembran um den Außenumfang des unverklebten runderneuerten Reifens angeordnet wird, wobei das Rad entlang der Innenseite des unverklebten runderneuerten Reifens einen inneren Hohlraum zwischen dem Rad und dem unverklebten runderneuerten Reifen bildet, der sich ungefähr von dem ersten Wulstabschnitt zu dem zweiten Wulstabschnitt erstreckt, und wobei eine aufblasbare Blase in dem inneren Hohlraum angeordnet ist, wobei die aufblasbare Blase dazu ausgeführt ist, sich auszudehnen und dadurch Kräfte gegen die Innenseite des unverklebten runderneuerten Reifens auszuüben, und wobei der Schritt des Durchführens eines Entgasungsvorgangs das Aufblasen der aufblasbaren Blase umfasst, um diese auszudehnen und dadurch eine Kraft gegen die Innenseite des unverklebten runderneuerten Reifens auszuüben.

6. Verfahren nach Anspruch 1, wobei der Schritt des Bildens einer Entgasungsbaugruppe ferner das Montieren des unverklebten runderneuerten Reifens auf einem Rad umfasst, bevor die flexible Entgasungsmembran um den Außenumfang des unverklebten runderneuerten Reifens angeordnet wird, wobei das Rad entlang der Innenseite des unverklebten runderneuerten Reifens einen inneren Hohlraum zwischen dem Rad und dem unverklebten runderneuerten Reifen bildet, der sich ungefähr von dem ersten Wulstabschnitt zu dem zweiten Wulstabschnitt erstreckt, und wobei eine aufblasbare Blase in dem inneren Hohlraum angeordnet ist, wobei die aufblasbare Blase dazu ausgeführt ist, sich auszudehnen und dadurch Kräfte gegen die Innenseite des unverklebten runderneuerten Reifens auszuüben, und wobei der Schritt des Durchführens eines Entgasungsvorgangs das Aufblasen der aufblasbaren Blase umfasst, um diese auszudehnen und dadurch eine Kraft gegen die Innenseite des unverklebten runderneuerten Reifens auszuüben.

7. Verfahren nach Anspruch 6, wobei der innere Hohlraum eine der ein oder mehr Vakuumkammern umfasst, so dass bei dem Schritt des Beaufschlagens einer jeden der ein oder mehr Vakuumkammern mit mindestens einem partiellen Unterdruck der innere Hohlraum mindestens mit einem partiellen Unterdruck beaufschlagt wird.

8. Verfahren nach Anspruch 7, wobei der innere Hohlraum mit mindestens einer Vakuumkammer der ein oder mehr entlang der Außenseite des unverklebten runderneuerten Reifens angeordneten Vakuumkammern in Fluidverbindung steht.

9. Verfahren nach Anspruch 6, wobei der unverklebte runderneuerte Reifen bei dem Schritt des Zerlegens von dem Rad abmontiert wird.

10. Verfahren nach Anspruch 1, ferner umfassend den Schritt des Anordnens eine aufblasbaren Blase in einem inneren Hohlraum des unverklebten runderneuerten Reifens, wobei der innere Hohlraum angrenzend an die Innenseite des unverklebten runderneuerten Reifens angeordnet ist, wobei der Schritt des Durchführens eines Entgasungsvorgangs das Aufblasen der aufblasbaren Blase umfasst, um eine ausreichende Kraft gegen die Innenseite des unverklebten runderneuerten Reifens auszuüben.

11. Verfahren nach Anspruch 1, wobei der Druck, mit dem die Entgasungskammer ausreichend beaufschlagt wird, um Gas aus dem Inneren des unverklebten runderneuerten Reifens zu entfernen, mindestens im Wesentlichen 6 bar beträgt.

12. Verfahren nach Anspruch 11, wobei der Entgasungsvorgang in ungefähr 40 Minuten durchgeführt wird.

13. Verfahren nach Anspruch 11, wobei der Druck, mit dem die Härtungskammer bei dem Schritt des Verklebens beaufschlagt wird, mindestens im Wesentlichen 6 bar beträgt.

14. Verfahren nach Anspruch 13, wobei der Schritt des Beaufschlagens einer jeden der ein oder mehr Vakuumkammern mit mindestens einem partiellen Unterdruck das Beaufschlagen einer jeden der ein oder mehr Vakuumkammern mit Unterdruck umfasst.

15. Verfahren nach Anspruch 1, ferner umfassend die folgenden Schritte:
Entfernen des unverklebten entgasten Reifens aus der Entgasungskammer nach Beendigung des Schrittes der Durchführung des Entgasungsvorgangs; und
Einbringen des unverklebten entgasten Reifens in die Härtungskammer nach Durchführung des Schrittes des Zerlegens der Entgasungsbaugruppe.

## Revendications

1. Procédé de formation d'un pneu rechapé, comprenant les opérations, consistant à :
fournir un pneu rechapé non collé (220), qui comprend une bande de roulement prévulcanisée (223), agencée de manière annulaire autour d'une circonférence extérieure d'une carcasse de pneu annulaire (221) avec une couche de liaison (222), comprenant un matériau de liaison non vulcanisé, agencé entre la bande de roulement prévulcanisée et la carcasse de pneu annulaire, le pneu rechapé non collé ayant une épaisseur qui s'étend entre un côté intérieur et extérieur du pneu rechapé non collé, où la carcasse de pneu annulaire comprend une paire de parois latérales, espacées dans une direction axiale du pneu rechapé non collé, chaque paroi latérale de la paire de parois latérales s'étendant radialement vers l'intérieur depuis une partie sous-chape d'une partie formant talon ;
former un ensemble de dégazage en agençant une membrane de dégazage flexible (230), (231) autour d'une circonférence extérieure du pneu retraité non collé, l'ensemble de dégazage ayant une ou plusieurs chambres à vide, qui entourent sensiblement collectivement au moins un côté extérieur du pneu rechapé non collé ;
placer chacune des une ou plusieurs chambres à vide sous une pression à vide au moins partielle ;
exécuter une opération de dégazage en mettant sous pression (256) une chambre de dégazage, tandis que chacune des une ou plusieurs chambres à vide dans l'ensemble de dégazage est au moins sous pression à vide partielle (254), la chambre de dégazage étant mise sous pression à une pression suffisante pour éliminer le gaz de l'intérieur du pneu rechapé non collé, de sorte que le pneu rechapé non collé est sensiblement exempt de gaz, pour prévoir un pneu rechapé non collé ;
désassembler l'ensemble de dégazage en séparant le pneu rechapé non collé de la membrane de dégazage flexible et
coller le pneu rechapé non collé, pour former un pneu rechapé collé, en mettant sous pression une chambre de durcissement (510) et en chauffant suffisamment la chambre de durcissement, pour durcir la couche de liaison du pneu rechapé non collé.

2. Procédé selon la revendication 1, où l'étape, consistant à former un ensemble de dégazage, comprend en outre les opérations, consistant à
agencer une première partie de la membrane de dégazage flexible autour d'une première partie latérale du côté extérieur du pneu rechapé non collé et
agencer une seconde partie de la membrane de dégazage flexible autour d'une seconde partie latérale du côté extérieur du pneu rechapé non collé, où la première partie de la membrane de dégazage flexible et la seconde partie de la membrane de dégazage flexible forment au moins partiellement une chambre parmi les une ou plusieurs chambres à vide, s'étendant le long du côté extérieur du pneu rechapé non collé, depuis une première partie formant talon vers une seconde partie formant talon du pneu rechapé non collé.

3. Procédé selon la revendication 2, où la première partie et la seconde partie forment ensemble une jonction d'étanchéité le long d'une partie de bande de roulement du côté extérieur.

4. Procédé selon la revendication 1, où la membrane de dégazage flexible est dimensionnée pour être utilisée avec une pluralité de pneus rechapés non collés de tailles différentes.

5. Procédé selon la revendication 2, où l'opération, consistant à former un ensemble de dégazage, comprend en outre l'opération, consistant à monter le pneu rechapé non collé sur une roue, avant d'agencer la membrane de dégazage flexible autour de la circonférence extérieure du pneu rechapé non collé, où la roue forme une cavité intérieure le long du côté intérieur du pneu rechapé non collé, entre la roue et le pneu rechapé non collé, s'étendant approximativement depuis la première partie formant talon vers la seconde partie formant talon et où une vessie gonflable est agencée dans la cavité intérieure, la vessie gonflable étant configurée pour s'étendre et appliquer par ce moyen des forces contre le côté intérieur du pneu rechapé non collé et l'étape, consistant à exécuter une opération de dégazage, comporte l'opération, consistant à gonfler la vessie gonflable pour qu'elle s'étende et applique par ce moyen une force contre le côté intérieur du pneu rechapé non collé.

6. Procédé selon la revendication 1, où l'opération, consistant à former un ensemble de dégazage, comprend en outre l'opération, consistant à monter le pneu rechapé non collé sur une roue, avant d'agencer la membrane de dégazage flexible autour de la circonférence extérieure du pneu rechapé non collé, où la roue forme une cavité intérieure le long du côté intérieur du pneu rechapé non collé, entre la roue et le pneu rechapé non collé, s'étendant approximativement depuis la première partie formant talon vers la seconde partie formant talon et où une vessie gonflable est agencée dans la cavité intérieure, la vessie gonflable étant configurée pour s'étendre et appliquer par ce moyen des forces contre le côté intérieur du pneu rechapé non collé et l'étape, consistant à exécuter une opération de dégazage, comporte l'opération, consistant à gonfler la vessie gonflable pour qu'elle s'étende et applique par ce moyen une force contre le côté intérieur du pneu rechapé non collé.

7. Procédé selon la revendication 6, où la cavité intérieure comprend une chambre parmi les une ou plusieurs chambres à vide, de sorte qu'au cours de l'étape, consistant à placer chacune des une ou plusieurs chambres à vide sous une pression à vide au moins partielle, la cavité intérieure est placée au moins sous pression à vide partielle.

8. Procédé selon la revendication 7, où la cavité intérieure est en communication de fluide avec au moins une chambre à vide des une ou plusieurs chambres à vide, agencées le long du côté extérieur du pneu rechapé non collé.

9. Procédé selon la revendication 6, où le pneu rechapé non collé est démonté de la roue au cours de l'opération de désassemblage.

10. Procédé selon la revendication 1, comprenant en outre l'opération, consistant à agencer une vessie gonflable dans une cavité intérieure du pneu rechapé non collé, la cavité intérieure étant agencée adjacente au côté intérieur du pneu rechapé non collé, où l'étape, consistant à exécuter une opération de dégazage, comporte l'opération, consistant à gonfler la vessie gonflable, pour appliquer suffisamment une force contre le côté intérieur du pneu rechapé non collé.

11. Procédé selon la revendication 1, où la pression, par laquelle la chambre de dégazage est mise sous pression suffisamment pour éliminer le gaz de l'intérieur du pneu rechapé non collé, est au moins sensiblement de 6 bars.

12. Procédé selon la revendication 11, où l'opération de dégazage est exécutée en approximativement 40 minutes.

13. Procédé selon la revendication 11, où la pression, par laquelle la chambre de durcissement est mise sous pression au cours de l'étape de liaison, est d'au moins sensiblement 6 bars.

14. Procédé selon la revendication 13, où l'étape, consistant à placer chacune des une ou plusieurs chambres à vide sous une pression à vide au moins partielle, comprend l'opération, consistant à placer chacune des une ou plusieurs chambres à vide sous pression à vide.

15. Procédé selon la revendication 1, comprenant en outre l'opération, consistant à :
éliminer le pneu dégazé non collé de la chambre de dégazage après avoir achevé l'opération, consistant à exécuter l'opération de dégazage et
placer le pneu dégazé non collé dans la chambre de durcissement, après avoir achevé l'étape, consistant à désassembler l'ensemble de dégazage.
